# EUROPEAN PATENT APPLICATION

(11) **EP 3 726 845 A1**
(43) Date of publication of application: **21.10.2020**
(21) Application number: 19169188.0
(22) Date of filing: 15.04.2019
(51) Int. Cl.: H04N 21/462, H04N 21/84, H04N 21/482, H04N 5/445, H04N 21/262, H04N 21/433, H04N 21/61

(54) **SYSTEM AND METHOD FOR ELECTRONIC PROGRAM GUIDE DATA SEARCHING**

(71) Applicant: Advanced Digital Broadcast S.A., 1293 Bellevue (CH)
(72) Inventor: Polak, Michal, 65-119 Zielona Gora (PL)
(74) Representative: Blonski, Pawel

(57) **Abstract**

A method for electronic program guide (EPG) data searching, at a receiver, in a broadcast only environment supporting only unidirectional transmission, the method comprising the steps of: retrieving, over a broadcast link, a database (224) comprising pairs of data sets wherein such a pair consists of a key (301) and one or more references (302) to available content items wherein such reference is unique for each content item; starting a process of retrieving metadata of the available content items; making said database (224) available for local searching prior to ending said process of retrieving metadata of the available content items; accepting a search query, comprising said key (301), for the database (224); providing a result set according to said query.

## Description

### TECHNICAL FIELD

The present invention relates to a system and method for electronic program guide (EPG) data searching. In particular, the present invention relates to improvements to data availability and speeding up access to EPG data.

### BACKGROUND OF THE INVENTION

Devices such as Set-Top-Boxes (STB) 101 (Consumer Premises Equipment in general) are capable of presenting a plurality of media types, for example live services, catch-up services, Video-On-Demand (VoD) services, Over-The-Top (OTT) items and the like.

A list of such services or items is retrieved from a broadcast head-end 130, 132 and it is kept locally on the STB in appropriate databases (STB software components 110) - for example - Live/Catchup/VoD services database 112, OTT items database 113, EPG events database 114. These services or items are presentable by the multimedia player 116. They are also accompanied by metadata, e.g. a name of the service or a detailed description of the associated content. For example, in case of movies these are starring actors, the director, the movie's genre and production year.

The aforementioned metadata is usually provided by means of Electronic Program Guide (EPG) information, for instance through broadcast Event Information Table (EIT) sections or any private data format via a broadcast 130, 133 (multiplexed with other broadcast data by means of the multiplexer 131) or an Internet Protocol (IP) (broadband) 140, 142 head-end.

The EPG metadata may be stored in the STB's EPG database 114 for immediate access or retrieved on-demand from an IP EPG head-end 142. The EPG information includes details about individual programmes of live or catch-up services and optionally also of VoD ones.

Metadata for OTT items is typically supplied in a private format over an IP channel from a dedicated head-end 141. The STB's Graphical User Interface (GUI) 111 typically enables a user to perform searching over metadata to find items the user is interested in and would like to watch or listen to them. In order to achieve this, the GUI takes advantage of the Local Search Engine 115 or the remote one 143.

Typically, there are two main approaches applied to search for available media items: (i) querying a remote head-end 143 over an IP protocol or (ii) searching information collected and kept locally on the STB by means of the Local Search Engine 115.

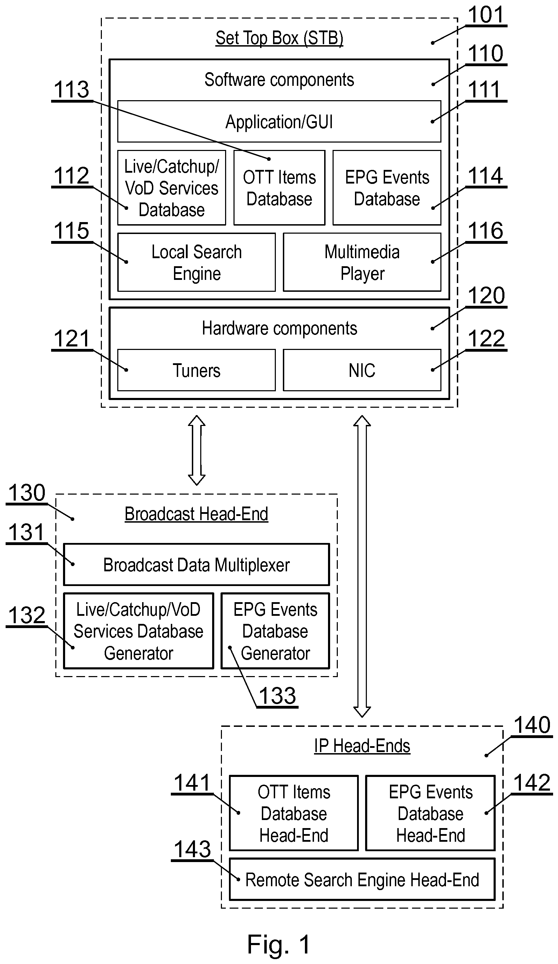

In some applications a mix of these two methods may be utilized. It is worth nothing that broadcast data is retrieved by means of the STB's hardware components 120 as tuners 121, while IP-originated data is collected through a Network Interface Card (NIC) 122. An example of an STB and the broadcast and IP head-ends is shown in Fig. 1.

A prior art of US2014/0289273 entitled "Method and system for enhancing metadata", which discloses an EPG system wherein a request for more information or enhanced content is forwarded by a CPE (Consumer Premises Equipment) to a server node, such as a head end of a cable network. A particularly advantageous aspect of the invention is that the search proxy of the server node has a list of content servers, for example trusted or partner websites, and is arranged to form a dedicated query to each of the servers on the basis of a general request for enhanced metadata from a CPE. The server is then transmitting a reply comprising response metadata in a defined format to the CPE.

Existing solutions typically assume that either the searching operation takes place on a remote head-end 143 or the STB (a local device) has collected all metadata and searching is carried out locally by an STB software component 115. The former approach requires a permanent IP connectivity, while the head-end 143 preferably is a powerful service running in a cloud to ensure low-latency responsiveness to queries issued by STBs. The latter method requires that the STB has retrieved all metadata information or is to collect such information during the searching operation, which may be the only possible approach applied for STBs with limited memory. However, this may lead to poor response times, as some information, for example EPG, may be broadcast with low bitrate meaning that all metadata would be collected in tens of seconds to several minutes, which is simply unacceptable from a user's point of view.

Some solutions may try to overcome this disadvantage by collecting metadata over an IP link, however, such an approach requires - again - a set of dedicated head-ends 140, typically for each metadata type as EPG events, OTT services and the like. Furthermore, also the IP connectivity may not always be available.

The aim of the development of the present invention is an improved and time effective method and apparatus for electronic program guide (EPG) data searching.

### SUMMARY AND OBJECTS OF THE PRESENT INVENTION

An object of the present invention is a method for electronic program guide data searching, at a receiver, in a broadcast only environment supporting only unidirectional transmission, the method comprising the steps of: retrieving, over a broadcast link, a database comprising pairs of data sets wherein such a pair consists of a key and one or more references to available content items wherein such reference is unique for each content item; starting a process of retrieving metadata of the available content items; making said database available for local searching prior to ending said process of retrieving metadata of the available content items; accepting a search query, comprising said key, for the database; providing a result set according to said query.

Preferably, the method further comprises a step of retrieving metadata for each reference present in the result set.

Preferably, said keys are automatically generated from said metadata selected from a group comprising: a title, a description, actors names, director's name, event's genre, event's production year.

Preferably, said content items are selected from a group comprising: live events, catch-up services, Video-On-Demand (VoD) services, Over-The-Top (OTT) items.

Preferably, said reference comprises for a unique event identifier, a date and time when the event commences.

Preferably, the setup of the database broadcast is such that the receiver is able to receive the database more frequently and quickly than it takes to retrieve all meta data of the currently available content items.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

Another object of the present invention is a method for generating data at a broadcast server, for electronic program guide data searching at a receiver, characterized in that said server is configured to execute the steps of: analyzing metadata of available content items and generating one or more keys related to each of said content items; generating a database consisting of a list of said keys and associating each key with at least one reference wherein such reference is unique for each content item; broadcasting said database and broadcasting said metadata of available content items.

Preferably, the database is repetitively broadcast more frequently and quickly than it takes to retrieve all metadata of the currently available content items.

### BRIEF DESCRIPTION OF THE DRAWINGS

These and other objects of the invention presented herein, are accomplished by providing a system and method for electronic program guide (EPG) data searching. Further details and features of the present invention, its nature and various advantages will become more apparent from the following detailed description of the preferred embodiments shown in a drawing, in which:
Fig. 1 shows an example of an STB and the broadcast and IP head-ends;
Fig. 2 presents an example of a system configured to build and provide a database;
Fig. 3 comprises an example of the database's content;
Fig. 4 shows a method for creating the database on the head-end;
Figs. 5A-5B show a method for browsing the database based on a key; and
Figs. 6A-6B show a method for filling the STB's EPG database with an EPG event that has been found in the STB's database including other services' EPG events that may appear in an EPG grid/list along with that found event.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

The present invention concerns a lightweight database 224 comprising keys (a single word or a phrase) and references to elements such as live services, EPG events, VoD services and optionally other entities as OTT items is prepared periodically by one of the Broadcast/Broadband Systems 201 components named Search Database 220, which uses its monitor 221 to retrieve metadata from individual databases such as Live Services 210, EPG Events 211, VoD Services 212, OTT Items 213 and the like.

In particular, the lightweight database 224 does not comprise any metadata of the associated content. Preferably, the database 224 is broadcast by a Broadcast Provider 230, for example by means of proprietary sections of within a transport stream. In such a case, unidirectional transmission is available from the broadcaster 230 to the receivers and a return channel is not available.

It is retrieved by the STB's hardware components 120 such as Tuners 121; this entails also that IP connectivity is not required. However, in some applications the database 224 may be downloaded to the STB 101 by means of an IP channel set up using a NIC 122 (a network interface controller) from a Broadband Provider 231.

Preferably, the database 224 is periodically re-built, for example on a daily basis, when EPG information 211 is updated, a channels list 210 is refreshed or VoD services 212 / OTT items 213 are added or removed.

Preferably, the database's 224 keys are extracted from the elements' metadata by the Keys Generator 222, while identifiers (Ids) of these elements are the references of a given key and are associated with a key through the Database Builder 223 resulting in a search database 224.

For example, if an EPG event's description or a VoD/OTT item's name comprises a text "Mr. Bean", such a text is the key (other examples of generating keys will be provided in the remainder of the specification), while identifiers of EPG events, VoD services or OTT items are the references pointed from the key. Similarly, if there is one of more services entitled "Football World Cup" or EPG events, VoD services or OTT items with such a description exist, the text "Football World Cup" may form a key and the elements' identifiers are the references referred by the key.

Preferably, other metadata such as a genre, a director, actors, a production year, a phrase from an event's description and the like may be used as the database 224 keys. Preferably, the element identifiers uniquely identify individual elements locally on the STB. For example, a live service identifier comprises a triplet of ONID.TSID.SVID (Original Network Id, Transport Stream Id, Service Id), an event identifier includes the service's triplet followed by a unique event Id for the service.

The service's unique event Id may be built in such a way that it unambiguously identifies the date and the time when the event commences or such information is appended to the event Id, for example as a Modified Julian Date (MJD) encoded as a text comprising four hexadecimal digits followed by the start time encoded as six digits in the 4-bit binary-coded decimal (BCD) format converted to a text. Such an identification of an item is required, because the search database does not include any metadata, while the STB could not have collected the EPG event referred by a key of the search database.

Due to an ability to parse the service (the parent of an EPG event) and the date/time when the event starts, the STB 101 may retrieve a list of events ordered by the start time for a given service. Furthermore, because the STB's application/GUI 111 is aware of the order of live services presented in an EPG grid/list, the GUI 111 may retrieve EPG events also of other services, so that the EPG grid/list would not comprise any empty spaces for a given time range and a set of live services.

Similarly, a VoD or OTT Id may comprise a unique string that enables retrieving metadata from a local VoD database 117 or remotely, if an IP link is available. Preferably, the information kept in the search database 224 may be compressed in order to achieve further reduction of the required memory/bandwidth.

Preferably, because the search database 224 is supplied as a list of pairs comprising plain text, the database may be directly transformed into programming structures such as a map with said key being a text and the references being a list of texts and hence easily searched without any additional complex processes.

Preferably, the searching process may be extended locally, depending on the STB's CPU power and amount of memory availability, for example to look for sub-texts or regular expression patterns. Still, no power and memory consuming SQL-like engine is required. Preferably, the retrieved search database 224 may be extended with metadata, only available locally, such as of local recordings, so that they could be also searched in a unified way.

It is worth noting that EPG events related with recordings may have expired, therefore they need to stored locally along with a corresponding recording asset (as metadata of such a recording). The GUI 111 uses the Local Search Engine 115 to search for references for a given key and may also take advantage of another STB's software component 110, namely the Metadata Databases/Collectors 117, which actually either keep metadata (as Live/Catchup/VoD Services Database 112, OTT Items Database 113, EPG Events Database 114) of individual object types such as Live Service or EPG Events or are capable of retrieving appropriate objects on demand.

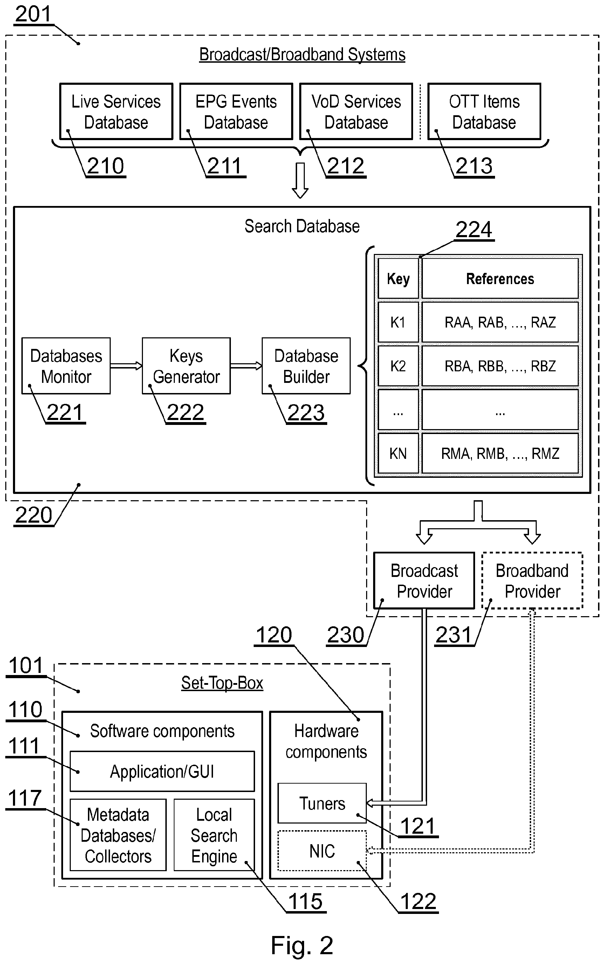

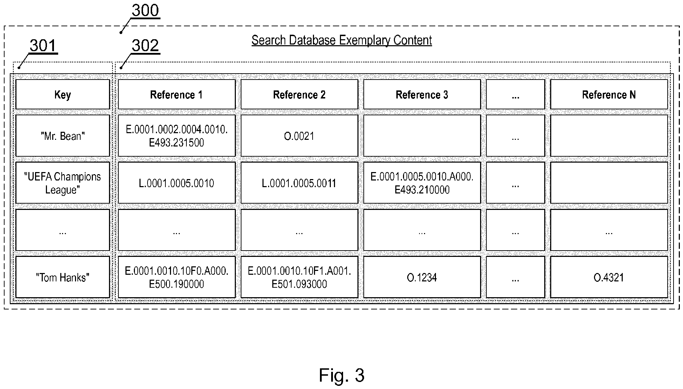

Fig. 2 shows an example of a system configured to build and deliver the search database 224 (including CPE STBs), while Fig. 3 comprises an example of the search database's content. The keys 301 are preferably of text type, while the references 302 are represented as a list or set of text comprising said Ids of individual media objects.

In the presented search database 224 example 300 the Ids start with an object type identifier such as a letter determining the object type, i.e. L for a live service, E for an EPG event and O for and OTT item. Further parts of individual Ids, separated by dots, let uniquely address a given object, so that its metadata could be displayed by the GUI 111 after retrieving the metadata from the Metadata Databases/Collectors 117.

The references may be provided as a text with comma-separated values (CSV), provides that said Ids do not comprise a comma. Preferably, the CSV text is compressed, which does not slow down the searching operation as the keys remain uncompressed, while still being able to reduce the memory used by the search database 224. Preferably, the keys and references are inserted to an existing implementation of a container, for example a map implementing a binary search tree.

For STBs with a non-volatile storage, such as Hard Disk Drive (HDD), the search database 224 may be stored in such memory using a file-based binary search tree (or alike) for immediate availability after booting. In such a case, the search database 224 is not retrieved after booting but replaced in a regular manner, i.e. when its version is changed (it is changed whenever a content of one or more databases 210-213 has been altered at the broadcast server).

Furthermore, there may be also multiple instances of the search database destined for various STB types (models), for example with various amount of memory. This entails that STBs with limited amount of memory may have access to a database with a reduced number of keys and references. It is worth noting that references of objects not supported by a given STB model are not taken into account (they may be also not provided in dedicated search database for an STB type).

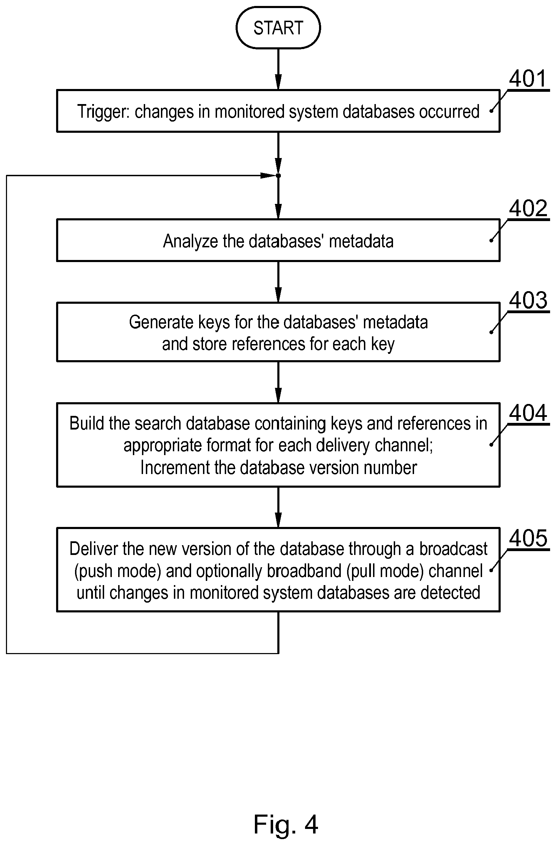

In an exemplary embodiment, the search database 224 is built on a head-end being a component of broadcast/broadband systems 201. The method of creating the database is shown in Fig. 4. The method starts with a step 401 at which a trigger awaits a change in the systems' databases 210-213.

Typically, these databases are changed on a daily basis, meaning a new version of the search database 224 is created also once a day. Changes to the databases are preferably monitored and aggregated in order to avoid frequent rebuilding of the search database 224.

When changes to the systems' database are considered as finished, the trigger is executed and the process advances to step 402 where metadata of elements (such as live services, EPG events, OTT services and the like) kept in the databases 210-213 are analyzed in a context of possible keys enabling to find individual elements.

At step 403, the method builds a list of keys and associates each key with a list of references. A reference is a unique system-wide identifier of an element, for example:
- L.0001.0005.0010 for a live service;
- E.0001.0002.0004.0010.E493.231500 for an EPG event; or
- 0.0021 for an OTT service.

A live service's identifier unambiguously identifies a service by a triplet. An EPG event identifier includes the triplet of the live service, the event belongs to, along with an event identifier uniquely addressing the event in context of the service. Further parts of the EPG event's identifier include the date and time when the event commences, so that its metadata could be easily retrieved by the STB by collecting sections with EPG data that are likely to contain that event. These may be standard Event Information Table (EIT) sections as specified by Digital Video Broadcasting (DVB)'s specification ETSI EN 300 468 or other EPG sections with proprietary data format. Other formats of the EPG event identifier are also possible, e.g. for events downloaded dynamically (on-the-fly) from an IP head-end.

Subsequently, at step 404, the method creates pairs of keys and references into a static search database in a format appropriate for a given delivery channel. For example, in case of a broadcast channel these are sections, while for the IP channel the search database may be provided on a request as a compressed file in JavaScript Object Notation (JSON) format or the like.

In this step the version of the database is preferably incremented (changed), so that the STB is aware of that fact. In case of broadcast sections that may be just new versions of these sections, while in case of the IP channel, a notification through a web sockets-based channel could be used to trigger STBs to download the new version of the search database.

At step 405 the new database is broadcast eventually or optionally it is available for download over an IP channel by means of the providers 230 and 231. Whenever changes in the systems' database are detected the method (as in step 401), the method jumps to step 402.

The setup of the database 224 broadcast is preferably such that the CPE is able to receive the database 224 more frequently and quickly than it takes to retrieve all metadata of the currently available events (EPG metadata). Therefore, a suitable, repetitive broadcast is employed for the database 224. In typical setups, a CPE will download the database 224 at startup and periodically update it locally whenever a new version is available.

In another embodiment the search database 224 is retrieved into the STB's memory so that the GUI 111 may offer users a means allowing them to search for items (references) related to one or more keys. The GUI takes advantage of the Local Search Engine 115, which operates directly on the retrieved search database 224.

In some cases a user may execute a search in the database 224 and obtain results for media items, for which metadata (detailed EPG information) is not yet available locally. In such a case the receiver may need to wait until a suitable metadata section has been caught from the broadcast by the receiver. Nevertheless, the user is able to search the EPG without said metadata.

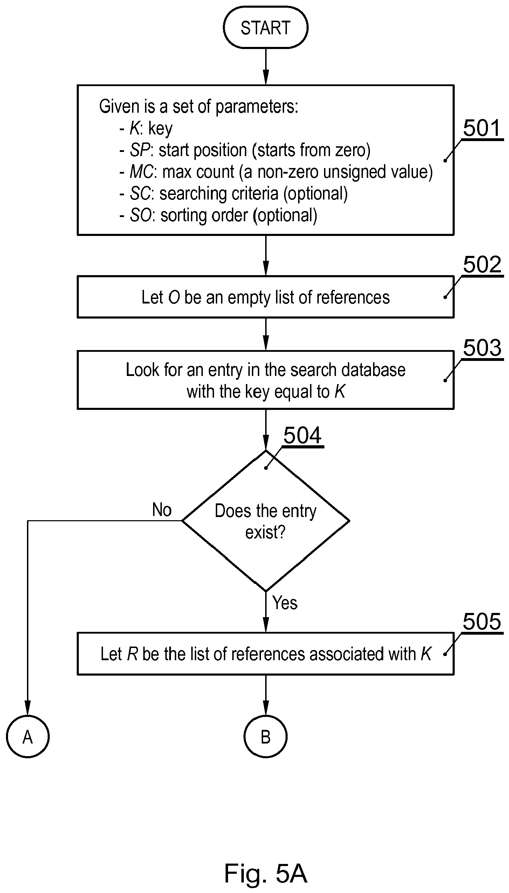

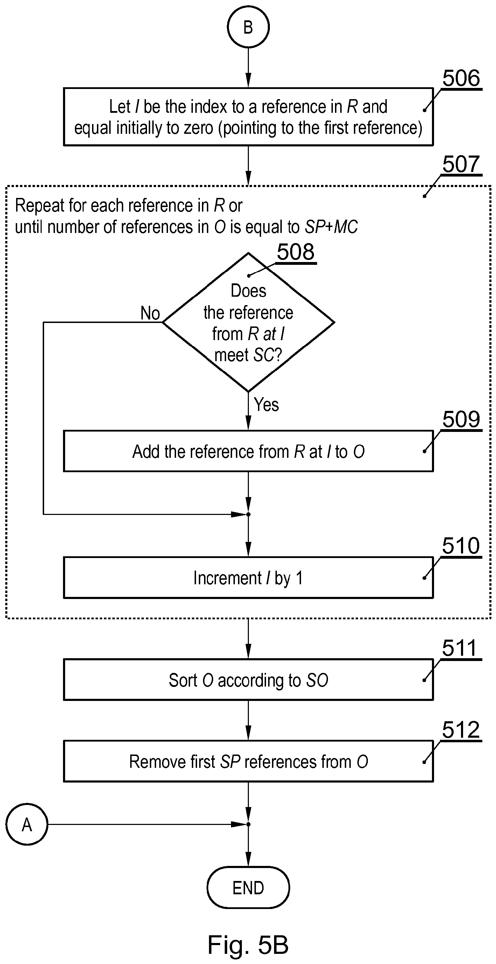

In Figs. 5A-5B there is shown a basic method that searches for elements in the STB's search database based on an input key. In another embodiment, more advanced methods are also possible, for example searching for a sub-text or using a regular expression. The basic method starts at step 501 where one or more input parameters are preferably accepted:
- K - a key
for which possible references are to be searched for,
- SP - a start position (the first item's index counted from zero),
- MC - a maximum number of items to be returned,
- SC - optional search criteria, for example indicating the type of elements (such as live services, EPG events, OTT services and the like),
- SO - optional sorting order, for example indicating sorting by the element type, then by the element's start time (if applicable).

Then, at step 502, an O variable denotes an empty output list of references. Next, at step 503 the process searches for an entry in the database 224 with the key K. At step 504 it is checked whether such an entry exists. If it does not, the method ends with the empty O, otherwise, the method jumps to step 505 where a new variable R is assigned all references pointed by the key K.

Subsequently, at step 506, a zero value is assigned to the variable I - being the index to a reference in the variable R, meaning that I points to the first element in the R.

Then, step 507 is repeated for each reference in R or until the number of references added to O is equal to the sum of SP and MC. The method checks at step 508 whether the reference at the index I in the R meets the searching criteria SC, if any. If it does not, the method jumps directly to step 510, where the value of I is incremented by one. If the result of the check at step 508 is positive, the method advances to step 509, where the reference at that index I in R is added to O and then step 510 is reached.

When the method leaves the loop 507, the list of references in O is sorted according to the sorting order SO (if any) at step 511. Then, at step 512 first SP references are removed from O and the method ends.

The resulting output list O comprises all found references (of the key K) satisfying the initial conditions given at step 501 giving the GUI 111 flexibility in forming queries to the Local Search Engine 115 and allowing to balance between memory needed for the result and performance indexes.

The found references may be presented by the GUI 111 or a message indicating that no elements have been found may be displayed, if the list O is empty.

In another embodiment the references (element identifiers) found by the method shown in Figs. 5A-5B may refer to elements that have not been retrieved by the STB. For example, an identifier may refer to an EPG event commencing in 9 days, while the STB caches up to 7 days of EPG events allowing to retrieve others EPG events on demand. Furthermore, when the user selects the EPG event by means of the GUI 111 on a screen with the search results, the GUI may display an EPG grid with previous and next EPG events also for other services.

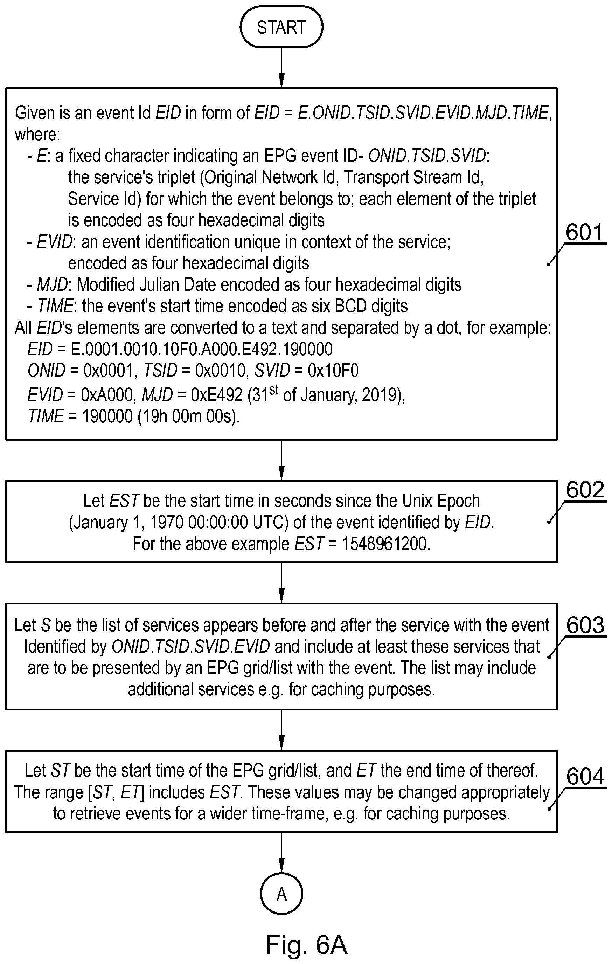

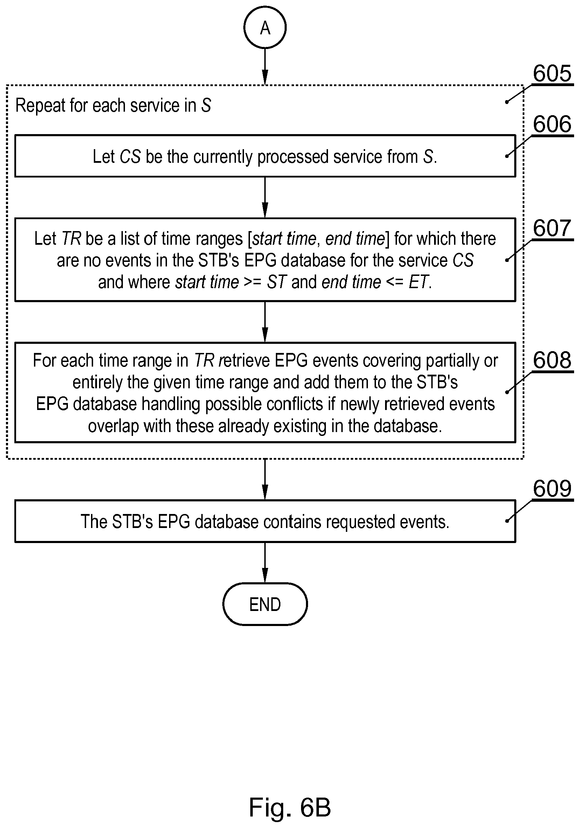

Figs. 6A-6B show a method for retrieving an EPG event that has been found in the STB search database including other services' EPG events that may appear in the EPG grid/list along with that found event. The method starts with step 601, at which an event identifier EID in form of E.ONID.TSID.SVID.EVID.MJD.TIME is accepted, where:
- E - a fixed character indicating an EPG event ID,
- ONID.TSID.SVID - the service's triplet (Original Network Id, Transport Stream Id, Service Id) for which the event belongs to; each element of the triplet is encoded as four hexadecimal digits,
- EVID - an event identification unique in context of the service; encoded as four hexadecimal digits,
- MJD - Modified Julian Date encoded as four hexadecimal digits,
- TIME - the event's start time encoded as six BCD digits.

All EID's elements are converted to a text and preferably separated by a dot, for example: EID = E.0001.0010.10F0.A000.E492.190000:
- ONID = 0x0001,
- TSID = 0x0010,
- SVID = 0x10F0,
- EVID = 0xA000,
- MJD = 0xE492 (31 st of January, 2019),
- TIME = 190000 (19h 00m 00s).

Then, at step 602 the variable EST denotes the event's start time preferably converted to the Unix Epoch units (seconds since January 1, 1970 00:00:00 UTC). Next, at step 603 to the variable S is assigned a list of services appearing before and after the service with the event Identified by ONID.TSID.SVID.EVID.

The list comprises at least these services that are to be presented by an EPG grid/ list with the given event. The list may include additional services e.g. for transmission caching purposes, so as to avoid additional waiting for events while they are being retrieved once the user has navigated within the EPG grid/list. At step 604, there is denoted by the variable ST a start time of the EPG grid/list and by ET variable an end time thereof. The range [ST, ET] includes the EST. These values may be changed appropriately to retrieve events for a wider time-frame, e.g. for transmission data caching purposes.

Subsequently, the method repeats step 605 for each service in the S by executing steps from 606 - 608. At step 606 there is assigned a currently processed service from the S to the variable CS. At step 607 the variable TR is assigned a list of time ranges [start time, end time], for which there are not any events in the STB's EPG database for the service CS and where the start time >= ST and the end time <= ET.

Next, at step 608, for each time range in TR, there are retrieved EPG events, covering partially or entirely the given time range. These collected events are added to the STB's EPG database.

Possible conflicts are handled if newly retrieved events overlap with these already existing in the database. When all services in S were processed the method jumps to step 609 indicating that the STB's EPG database comprises requested events and they may be displayed by the GUI 111. Subsequently, the process ends.

In the presented embodiments a static search database 224 is built on a head-end 201 periodically - as shown in Fig. 4 - for example every day. The database is lightweight, meaning it preferably comprises a text with key 301 pointing to one or more references 302 of elements of various types. A reference is a text identifier unambiguously identifying a given element. The search database may be broadcast with sections or exposed by an IP head-end for IP-enabled STBs; however the IP channel is considered as optional. In particular, there is no head-end service accepting searching queries - the search operation always takes place on the STB.

References may be compressed for further reducing memory usage on STBs. The search database does not contain any metadata of the elements, hence it is as compact as possible and data redundancy does not occur. There are not required any additional SQL engines or SQL-based databases while the lightweight database is quickly available to users. Therefore, the invention provides a useful, concrete and tangible result.

Elements may be searched - as shown in Figs. 5A-5B - even if the corresponding items have not be collected by the STB. For example, a result of a searching operation may result a number of EPG event identifiers. At this point the GUI 111 may collect the missing EPG events. Because EPG event's identifiers directly addresses the service the events belong to and the start time of the event, the GUI may retrieve only events in a specific range to reduce memory usage.

Furthermore, by taking into account the service list, also events belonging to other services and commencing in the same time range may be easily identified what enables the GUI to display screens with an EPG grid or list without any holes (empty cells/rows) - this was shown in Figs. 6A-6B. The search database may be used directly to fill up a standard implementation of containers such as a binary search tree (in volatile memory or file-based). The presented methods may be further extended, for example to look for a sub-text or basing on regular expression patterns. Also, independent databases for various STB models are possible, for example without OTT items for non-IP-enabled STBs. In addition, the search database may be merged with locally available only metadata such as of local recordings to allow searching them in a unified way - by means of the Local Search Engine 115. Therefore, the invention as described is not abstract and the machine or transformation test is fulfilled.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for electronic program guide (EPG) data searching may be performed and/ or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for electronic program guide (EPG) data searching, at a receiver, in a broadcast only environment supporting only unidirectional transmission, the method comprising the steps of:
• retrieving, over a broadcast link, a database (224) comprising pairs of data sets wherein such a pair consists of a key (301) and one or more references (302) to available content items wherein such reference is unique for each content item;
• starting a process of retrieving metadata of the available content items;
• making said database (224) available for local searching prior to ending said process of retrieving metadata of the available content items;
• accepting a search query, comprising said key (301), for the database (224);
• providing a result set according to said query.

2. The method according to claim 1 wherein the method further comprises a step of retrieving metadata for each reference present in the result set.

3. The method according to claim 1 wherein said keys are automatically generated from said metadata selected from a group comprising: a title, a description, actors names, director's name, event's genre, event's production year.

4. The method according to claim 1 wherein said content items are selected from a group comprising: live events, catch-up services, Video-On-Demand (VoD) services, Over-The-Top (OTT) items.

5. The method according to claim 1 wherein said reference comprises for a unique event identifier, a date and time when the event commences.

6. The method according to claim 1 wherein the setup of the database (224) broadcast is such that the receiver (CPE) is able to receive the database (224) more frequently and quickly than it takes to retrieve all meta data of the currently available content items.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. A method for generating data at a broadcast server, for electronic program guide (EPG) data searching at a receiver, **characterized in that** said server is configured to execute the steps of:
• analyzing metadata (402) of available content items and generating one or more keys related to each of said content items;
• generating a database (224) consisting of a list of said keys and associating each key with at least one reference wherein such reference is unique for each content item;
• broadcasting said database (224) and broadcasting said metadata of available content items.

10. The method according to claim 9 wherein the database (224) is repetitively broadcast more frequently and quickly than it takes to retrieve all metadata of the currently available content items.
